# FASCICULE DE BREVET EUROPEEN

(11) **EP 3 660 677 B1**
(45) Date de publication et mention de la délivrance du brevet: **28.07.2021**
(21) Numéro de dépôt: 19212160.6
(22) Date de dépôt: 28.11.2019
(51) Int. Cl.: G06F 9/50, G06F 9/52, G06F 11/30

(54) **PROCÉDÉ ET DISPOSITIF DE SURVEILLANCE D'APPLICATION(S) LOGICIELLE(S) AVEC PÉRIODE TEMPORELLE TAMPON PRÉCÉDANT UNE SECTION RÉSERVÉE POUR UN ENSEMBLE DE RESSOURCE(S) PARTAGÉE(S), PROGRAMME D'ORDINATEUR ET SYSTÈME AVIONIQUE ASSOCIÉS**
ÜBERWACHUNGSVERFAHREN UND -VORRICHTUNG VON SOFTWARE-APPS MIT EINER PUFFERZEITSPANNE, DIE EINEM RESERVIERTEN ABSCHNITT FÜR EINE GESAMTHEIT VON GETEILTEN RESSOURCEN VORAUSGEHT, ENTSPRECHENDES COMPUTERPROGRAMM UND FLUGZEUGSYSTEM
METHOD AND DEVICE FOR MONITORING SOFTWARE APPLICATION(S) WITH BUFFER TIME PERIOD PRECEDING A SECTION RESERVED FOR A SET OF SHARED RESOURCE(S), ASSOCIATED COMPUTER PROGRAM AND AVIONICS SYSTEM

(30) Priorité: 30.11.2018 FR 1872148
(43) Date de publication de la demande: 03.06.2020
(73) Titulaire: Thales, 92400 Courbevoie (FR)
(72) Inventeur: RENARD, Benoit, 33380 MARCHEPRIME (FR); LE BIHAN, Kevin, 33185 LE HAILLAN (FR)
(74) Mandataire: Lavoix

(56) Documents cités:
- US-A1- 2010 211 682
- BORIS MOTRUK ET AL: "IDAMC: A Many-Core Platform with Run-Time Monitoring for Mixed-Criticality", HIGH-ASSURANCE SYSTEMS ENGINEERING (HASE), 2012 IEEE 14TH INTERNATIONAL SYMPOSIUM ON, IEEE, 25 octobre 2012 (2012-10-25), pages 24-31, XP032276777, DOI: 10.1109/HASE.2012.19 ISBN: 978-1-4673-4742-6

## Description

La présente invention concerne un procédé de surveillance d'au moins une application logicielle apte à être exécutée sur une plateforme, la plateforme comportant des ressources auxquelles chaque application logicielle est susceptible d'accéder lors de son exécution, le procédé étant mis en œuvre par un dispositif électronique de surveillance.

L'invention concerne également un programme d'ordinateur comportant des instructions logicielles qui, lorsqu'elles sont exécutées par un ordinateur, mettent en œuvre un tel procédé.

L'invention concerne également un dispositif électronique de surveillance d'au moins une application logicielle apte à être exécutée sur une plateforme, la plateforme comportant des ressources auxquelles chaque application logicielle est susceptible d'accéder lors de son exécution.

L'invention concerne également un système électronique avionique comprenant une mémoire apte à stocker au moins une application logicielle avionique ; une plateforme apte à exécuter chaque application logicielle avionique, la plateforme comportant des ressources auxquelles chaque application logicielle est susceptible d'accéder lors de son exécution ; et un tel dispositif électronique de surveillance apte à surveiller chaque application logicielle avionique.

L'invention concerne le domaine de la qualification des plateformes informatiques, notamment des plateformes embarquées, en particulier des plateformes avioniques embarquées. L'invention concerne alors la surveillance du fonctionnement d'applications logicielles exécutées sur de telles plateformes, notamment pour des plateformes avioniques, avec par exemple un ou plusieurs processeurs multicœur.

L'invention concerne plus précisément le domaine des systèmes critiques, et l'invention cherche à garantir le bon fonctionnement d'applications logicielles, dites critiques, ayant un impact fort en termes de sureté sur le système associé, tel que le système électronique avionique. Ces applications logicielles critiques, également appelées fonctions critiques, doivent généralement être exécutées dans un temps donné avec une tolérance temporelle définie. A l'inverse, d'autres applications logicielles, dites non-critiques, ont un impact faible, voire pas d'impact, en termes de sureté sur le système associé, et leur exécution peut alors être au moins partiellement décalée dans le temps sans remettre en cause le bon fonctionnement du système associé.

Une difficulté apparaît alors lorsque plusieurs applications logicielles sont exécutées sur une même plateforme, notamment via un même processeur mono-cœur ou multicœur, et que de manière générale les ressources de la plateforme sont potentiellement utilisables simultanément par plusieurs applications logicielles, et ce dans plusieurs contextes, à savoir d'une part dans un contexte à faible impact, voire sans impact, en termes de sureté, et d'autre part, dans un contexte à fort impact en termes de sureté avec une forte échéance temporelle d'exécution (de l'anglais *deadline*).

« IDAMC : A Many-Core Platform with Run-Time Monitoring for Mixed-Criticality » de Motruk et al décrit une plateforme multicœur exécutant des applications de criticité différente, toutes les applications devant être certifiées au plus haut niveau de criticité, à moins qu'elles ne soient suffisamment isolées. L'isolement permet la certification individuelle des applications et une re-certification économique d'applications individuelles après une mise à jour.

US 2010/211 682 A1 concerne la gestion de l'accès à une ressource partagée avec le maintien d'un horodatage pour chaque ressource partagée, l'horodatage représentant l'heure du dernier accès à la ressource, puis la détection d'une éventuelle réservation associée à la ressource si l'horodatage de la ressource représente une heure future par rapport à l'heure actuelle, auquel cas la ressource est réservée et il n'est pas possible d'y accéder.

Il est alors connu d'éviter par conception tout partage, à un instant temporel donné d'exécution, de ressource(s) de la plateforme entre application(s) logicielle(s) critique(s) et application(s) logicielle(s) non-critique(s).

Toutefois, il est parfois impossible de garantir qu'un tel partage de ressource(s) ne se produira pas, notamment avec un ou plusieurs processeurs multicœur.

Il est également connu de prévoir des marges temporelles à l'issue de l'exécution de chaque application logicielle, ces marges incluant un potentiel décalage temporel maximal, afin d'éviter qu'un retard d'exécution d'une application logicielle non-critique entraine à son tour un retard dans l'exécution de l'application logicielle critique dont l'exécution suit celle de ladite application logicielle non-critique.

Toutefois, avec de telles marges temporelles, la plateforme est sous-utilisée.

Le but de l'invention est alors de proposer un procédé et un dispositif de surveillance d'au moins une application logicielle apte à être exécutée sur une plateforme, qui permettent d'offrir un meilleur fonctionnement de la plateforme, tout en garantissant une bonne exécution des applications logicielles, notamment des applications logicielles critiques devant généralement être exécutées dans un temps donné avec une tolérance temporelle définie.

A cet effet, l'invention a pour objet un procédé de surveillance selon la revendication 1.

Avec le procédé de surveillance selon l'invention, la mise en attente de la requête d'accès émise par l'application logicielle non-critique si ladite requête est émise pendant la période temporelle tampon précédant l'exécution de la prochaine application logicielle critique comportant la section réservée pour ledit ensemble de ressource(s) partagée(s), permet d'éviter que ladite application logicielle non-critique utilise l'ensemble de ressource(s) partagée(s) si elle ne peut ensuite pas libérer ledit ensemble de ressource(s) partagée(s) avant l'exécution de la prochaine application logicielle critique comportant la prochaine section réservée.

Autrement dit, la surveillance de chaque requête d'accès émise par l'application logicielle non-critique pour accéder à l'ensemble de ressource(s) partagée(s) entre elle et au moins une application logicielle critique et la mise en attente, précitée et sous condition, de certaine(s) requête(s) d'accès émise(s) par l'application logicielle non-critique vise à autoriser l'accès de l'application logicielle non-critique audit ensemble de ressource(s) partagée(s) seulement lorsque ledit ensemble sera ensuite libéré avant qu'une application logicielle critique ait besoin d'accéder audit ensemble de ressource(s) partagée(s).

Suivant d'autres aspects avantageux de l'invention, le procédé de surveillance est selon l'une quelconque des revendications 2 à 8.

L'invention a également pour objet un programme d'ordinateur selon la revendication 9.

L'invention a également pour objet un dispositif électronique de surveillance selon la revendication 10.

L'invention a également pour objet un système électronique avionique selon la revendication 11.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système électronique avionique selon l'invention, comprenant une mémoire apte à stocker au moins une application logicielle avionique, une plateforme apte à exécuter chaque application logicielle avionique, et un dispositif électronique de surveillance de chaque application logicielle avionique, la plateforme comportant des ressources auxquelles chaque application logicielle est susceptible d'accéder lors de son exécution ;
- la figure 2 est un organigramme schématique d'un procédé de surveillance d'au moins une application logicielle apte à être exécutée sur la plateforme, le procédé étant mis en œuvre par le dispositif de surveillance de la figure 1 ;
- la figure 3 est un logigramme d'un exemple de mise en œuvre du procédé de surveillance de la figure 2 ;
- la figure 4 est un schéma illustrant une ressource partagée entre une application logicielle non-critique et deux applications logicielles critiques ;
- la figure 5 est une vue illustrant une mise en œuvre de la surveillance selon l'invention, dans le cas où l'application logicielle critique est une fonction de commutation entre deux applications logicielles non-critiques, avec un premier exemple où la requête est émise avant une période temporelle tampon précédant l'exécution de ladite application logicielle critique et n'est alors pas mise en attente, et un deuxième exemple où la requête est émise pendant ladite période temporelle tampon et est alors mise en attente ; et
- la figure 6 est une vue analogue à celle de la figure 5 pour une mise en œuvre de la surveillance selon l'invention, dans le cas où l'application logicielle non-critique est destinée à être exécutée par un cœur d'un processeur multicœur de la plateforme et l'application logicielle critique est destinée à être exécutée par un autre cœur dudit processeur.

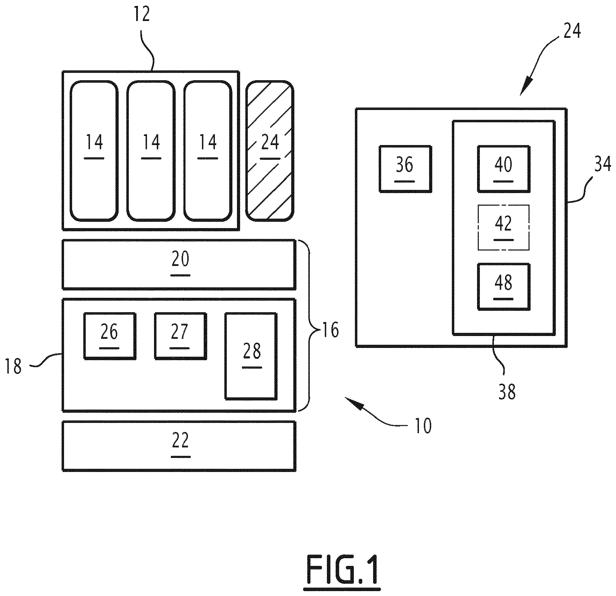

Sur la figure 1, un système électronique 10, notamment un système électronique avionique destiné à être embarqué à bord d'un aéronef, comprend une mémoire 12 apte à stocker des applications logicielles 14 et une plateforme 16 apte à exécuter chaque application logicielle 14, la plateforme 16 comportant des ressources 18 auxquelles chaque application logicielle 14 est susceptible d'accéder lors de son exécution et hébergeant au moins un système d'exploitation 20, la plateforme 16 étant reliée à d'autres systèmes électroniques 22, tels que d'autres systèmes électroniques avioniques de l'aéronef.

Le système électronique 10 comprend en outre, selon l'invention, un dispositif électronique 24 de surveillance d'au moins une application logicielle 14.

Sur la figure 1, par souci de simplification du dessin, la mémoire 12 a été représentée à l'extérieur du rectangle symbolisant les ressources 18, ceci afin de faire apparaître de manière distincte la couche logicielle correspondant aux applications logicielles 14, ainsi que le cas échéant au dispositif de surveillance 24. Néanmoins, l'homme du métier comprendra bien entendu que la mémoire 12 est incluse dans les ressources 18 de la plateforme 16.

L'aéronef est de préférence un avion. En variante, l'aéronef est un hélicoptère, ou encore un drone piloté à distance par un pilote.

Dans l'exemple de la figure 1, la mémoire 12 est apte à stocker trois applications logicielles 14 distinctes, et le dispositif électronique de surveillance 24 est alors configuré pour surveiller chacune de ces applications logicielles 14.

Chaque application logicielle 14 est destinée à être exécutée par la plateforme 16, et est alors conçue pour émettre un ou plusieurs appels à destination du système d'exploitation 20 hébergé par la plateforme 16 et est également configurée pour utiliser des ressources 18 de la plateforme 16.

Lorsque le système électronique 10 est un système électronique avionique embarqué à bord de l'aéronef, chaque application logicielle 14 est également appelée fonction avionique. Les applications logicielles 14 remplissent par exemple différentes fonctions pour l'accomplissement d'un vol.

Parmi les applications logicielles 14, certaines applications logicielles sont dites critiques, et sont alors notées 14_{C}, et d'autres applications logicielles sont dites non-critiques et notées 14_{NC}.

L'homme du métier comprendra alors que la référence 14 désignera une application logicielle de manière générale, qu'il s'agisse d'une application critique ou non, et que la référence 14_{C} désigne une application logicielle critique en particulier, alors que la référence 14_{NC} désigne une application non-critique en particulier.

Par application logicielle critique 14_{C}, on entend une application logicielle devant être exécutée dans un temps donné avec une tolérance temporelle définie. Une application logicielle critique 14_{C} a généralement un impact fort en termes de sureté sur le système associé, tel que le système électronique avionique 10, et est par exemple une application concernant le système de freinage ou le système de gestion du vol de l'aéronef.

A l'inverse, par application logicielle non-critique 14_{NC}, on entend une application logicielle dont l'exécution peut être au moins partiellement décalée dans le temps sans remettre en cause le bon fonctionnement du système associé. Une telle application logicielle non-critique 14_{NC} a alors un impact faible, voire pas d'impact, en termes de sureté sur le système associé, tel que le système électronique avionique 10.

Chaque application logicielle critique 14_{C} a par exemple un niveau de criticité correspondant à un niveau DAL défini selon la norme DO-178 révision B et suivante(s), ou selon la norme ARP4754.

Selon cet exemple, chaque application logicielle critique 14_{C} a alors de préférence un niveau de criticité égal au niveau DAL A ou au niveau DAL B, les niveaux DAL A et DAL B étant considérés comme les plus critiques, et chaque application logicielle non-critique 14_{NC} a alors un niveau de criticité égal au niveau DAL C, au niveau DAL D ou encore au niveau DAL E, les niveaux DAL C à DAL E étant considérés comme les moins critiques.

Dans l'exemple d'un système radar, une application logicielle critique 14_{C} concernera alors par exemple un calcul de mode sur des données provenant de capteurs, l'exécution d'un tel calcul devant être effectuée dans un temps donné avec une tolérance temporelle prédéfinie, et à défaut, un retard dans ce calcul de mode entraînant l'absence d'images radar, ce qui est un impact opérationnel fort. *A contrario,* l'affichage d'une interface homme/machine de maintenance pour le système radar est une application logicielle non-critique 14_{NC}, un retard dans l'affichage des données de maintenance ayant un impact faible, un tel affichage des données de maintenance n'étant pas nécessaire lors d'un vol de l'aéronef.

La plateforme 16 est notamment destinée à être embarquée à bord de l'aéronef. La plateforme 16 est, par exemple, une unité de traitement d'informations formée d'une ou plusieurs mémoires associées à un ou plusieurs processeurs, tels que des processeurs multicœur.

L'invention est applicable à différents types d'architecture logicielle, notamment à une architecture dite de multitraitement symétrique, également appelée architecture SMP (de l'anglais *Symetrical Multi-Processing*), ou encore à une architecture dite de multitraitement asymétrique, également appelée architecture AMP (de l'anglais *Asymetrical Multi-Processing*).

Les ressources 18 de la plateforme 16 sont des éléments physiques ou logiques propres à être mis à disposition de la ou des applications logicielles 14.

Les ressources 18 sont, par exemple, réparties en les catégories suivantes :
- des ressources de type traitement de données (de l'anglais *Processing*). De telles ressources comportent par exemple un ou plusieurs processeurs, tels que des processeurs mono-cœur ou bien des processeurs multicœur ayant chacun plusieurs cœurs distincts ;
- des ressources de type mémoire de masse (de l'anglais *Mass-Memory*)*;*
- des ressources de type entrée et sortie ;
- des ressources spécifiques aux réseaux avioniques. De telles ressources sont, par exemple, des routeurs de communication d'un réseau ARINC 664 ; et
- des ressources de type graphique, c'est-à-dire des ressources permettant un affichage, tel qu'un écran.

Dans l'exemple de la figure 1, en termes de ressources de type traitement de données, la plateforme 16 comprend un processeur multicœur 26 ayant plusieurs cœurs distincts. En termes de ressources de type mémoire de masse, la plateforme 16 comprend une mémoire de masse 27, et en termes de ressources de type entrée/sortie, la plateforme 16 comprend un périphérique 28.

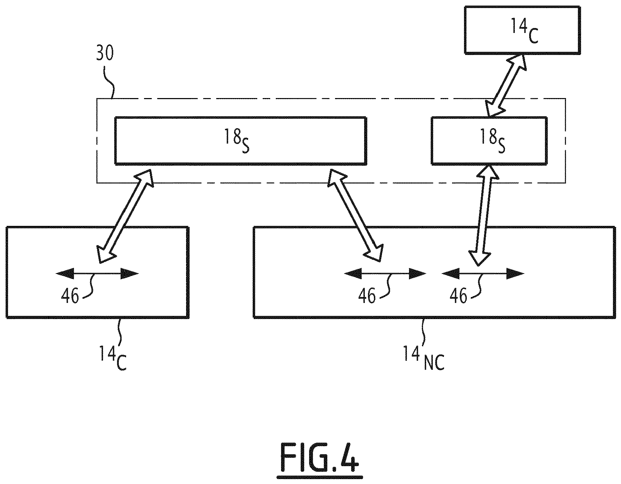

Pour chaque application logicielle non-critique 14_{NC} est déterminé un ensemble 30 de ressource(s) 18 qui sont partagée(s) entre ladite application logicielle non-critique 14_{NC} et au moins une application logicielle critique 14_{C} au cours de l'exécution de ladite application logicielle non-critique 14_{NC}. La ou les ressources 18 qui sont partagées entre ladite application logicielle non-critique 14_{NC} et au moins une application logicielle critique 14_{C} sont alors appelées ressources partagées et notées 18s, comme représenté sur la Figure 4.

L'homme du métier comprendra alors que la référence 18 désigne une ressource de manière générale, qu'il s'agisse d'une ressource partagée ou non, et que la référence 18s désigne une ressource partagée en particulier.

La détermination de l'ensemble 30 de ressource(s) partagée(s) 18s pour chaque application logicielle non-critique 14_{NC} est par exemple effectuée via une analyse statique de la conception des applications logicielles 14 aptes à être exécutées sur la plateforme 16.

Chaque ressource partagée 18s est par exemple choisie parmi le groupe consistant en : un cœur d'un processeur 26 de la plateforme, une zone de la mémoire 27, également appelée zone mémoire, de la plateforme hébergeant un objet logiciel partagé par plusieurs files d'exécution, et au moins une partie du périphérique 28 de la plateforme 16.

La zone mémoire de la plateforme hébergeant un objet logiciel partagé par plusieurs files d'exécution est par exemple une file d'attente, ou queue, dans laquelle les premiers éléments entrés sont aussi les premiers à sortir, également appelée FIFO (de l'anglais *First In First Out*), une zone partagée, un état de l'objet, une variable globale, etc.

La au moins une partie du périphérique 28 est par exemple une ou plusieurs mémoires caches, un port USB, un port série, une carte vidéo, une carte réseau, etc.

Le système d'exploitation 20 est, par exemple, un système d'exploitation conforme à la norme ARINC 653, ou un système d'exploitation POSIX, ou encore un hyperviseur, ou encore un middleware.

L'homme du métier comprendra alors que le système d'exploitation 20 s'entend au sens large, et est de manière plus générale un ensemble d'au moins un logiciel de base, conçu pour offrir des services de différents types à chaque application 14.

Le dispositif électronique de surveillance 24 est, comme représenté sous forme de hachures sur la figure 1, de préférence apte à être exécuté directement par la plateforme 16. Le dispositif de surveillance 24 est alors par exemple de préférence en forme d'une fonction de surveillance intégrée au système d'exploitation 20.

En variante, également visible sur la figure 1, le dispositif électronique de surveillance 4 est distinct de la plateforme 16, et comprend une unité de traitement d'informations 34 formée par exemple d'un processeur 36 associé à une mémoire 38.

Le dispositif électronique de surveillance 24 comprend un module de surveillance 40 configuré pour surveiller chaque requête d'accès émise par une application logicielle non-critique 14_{NC} respective afin d'accéder à un ensemble 30 respectif de ressource(s) 18s partagée(s) entre ladite application logicielle non-critique 14_{NC} et au moins une application logicielle critique 14_{C}.

Le dispositif électronique de surveillance 24 comprend un module de mise en attente 42 configuré pour mettre en attente la requête d'accès émise par l'application logicielle non-critique 14_{NC} si ladite requête est émise pendant une période temporelle tampon 44 précédant l'exécution de la prochaine application logicielle critique 14_{C} comportant une section réservée 46 pour ledit ensemble 30 de ressource(s) partagée(s) 18s. La section réservée 46, également appelée section critique, est une période temporelle au cours de laquelle une application logicielle 14 respective, telle la prochaine application logicielle critique 14_{C}, requiert un accès exclusif à au moins l'une des ressources 18s dudit ensemble 30 de ressource(s) partagée(s).

En complément facultatif, le dispositif électronique de surveillance 24 comprend un module d'envoi 48 configuré pour envoyer à l'application logicielle non-critique 14_{NC} un signal l'informant que sa requête d'accès a été le cas échéant mise en attente par le module de mise en attente 42.

Dans l'exemple de la figure 1, que le dispositif de surveillance 24 soit distinct de la plateforme 16, ou bien hébergé et exécuté par la plateforme 16, le module de surveillance 40, le module de mise en attente 42, et en complément facultatif le module d'envoi 48, sont réalisés chacun sous forme d'un logiciel, ou d'une brique logicielle, exécutables par un processeur, tel que le processeur 32 lorsque le dispositif de surveillance 24 est distinct de la plateforme 16. La mémoire 34 du dispositif de surveillance 24 est alors apte à stocker un logiciel de surveillance configuré pour surveiller chaque requête d'accès émise par une application logicielle non-critique 14_{NC} respective pour accéder à un ensemble 30 respectif de ressource(s) 18_{S} partagée(s) entre ladite application logicielle non-critique 14_{NC} et au moins une application logicielle critique 14_{C}, un logiciel de mise en attente configuré pour mettre en attente la requête émise par l'application logicielle non-critique 14_{NC} si ladite requête est émise pendant la période temporelle tampon 44 précédant l'exécution de la prochaine application logicielle critique 14_{C} comportant une section réservée 46 respective pour ledit ensemble 30 de ressource(s) partagée(s) 18s. En complément facultatif, la mémoire 34 du dispositif de surveillance 24 est alors apte à stocker un logiciel d'envoi configuré pour envoyer à l'application logicielle non-critique 14_{NC} correspondante un signal l'informant que sa requête d'accès a été le cas échéant mise en attente par le logiciel de mise en attente. Le processeur 32 du dispositif de surveillance 24 est alors apte à exécuter le logiciel de surveillance et le logiciel de mise en attente, ainsi qu'en complément facultatif le logiciel d'envoi.

En variante non représentée, le module de surveillance 40 et le module de mise en attente 42, ainsi qu'en complément facultatif le module d'envoi 48, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif de surveillance 24 est réalisé sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium apte à mémoriser des instructions électroniques et à être couplé à un bus d'un système informatique. A titre d'exemple, le support lisible est une disquette ou disque souple (de l'anglais *Floppy Disc*), un disque optique, un CD-ROM, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comprenant des instructions logicielles.

Le module de surveillance 40 est configuré pour surveiller chaque requête d'accès émise par une application logicielle non-critique 14_{NC} respective afin d'accéder à l'ensemble 30 de ressource(s) partagée(s) 18s. Le module de surveillance 40 est notamment configuré pour surveiller chaque demande de verrouillage (de l'anglais *lock acquisition*) afin d'obtenir une section réservée 46 respective pour ledit ensemble 30 de ressource(s) partagée(s) 18s, c'est-à-dire configuré pour surveiller chaque demande de verrouillage émise par l'application logicielle non-critique 14_{NC} requérant un accès exclusif à au moins l'une des ressources 18s dudit ensemble 30 de ressource(s) partagée(s).

Chaque demande de verrouillage émise par l'application logicielle non-critique 14_{NC} respective est par exemple adressée au système d'exploitation 20, et le module de surveillance 40 est alors configuré pour interagir avec le système d'exploitation 20 afin de surveiller l'ensemble des demandes de verrouillage émises par les applications logicielles non-critiques 14_{NC}.

Le module de mise en attente 42 est configuré pour mettre en attente la requête d'accès émise par l'application logicielle non-critique 14_{NC} si ladite requête est émise pendant la période temporelle tampon 44 précédant l'exécution de la prochaine application logicielle critique 14_{C} comportant une section réservée 46 correspondante pour ledit ensemble 30 de ressource(s) partagée(s).

Le module de mise en attente 42 est alors par exemple configuré pour, à chaque début de section réservée par l'application logicielle non-critique 14_{NC} respective, vérifier si une période temporelle tampon 44 respective associée à l'ensemble 30 de ressource(s) partagée(s) correspondant à ladite section réservée 46 a déjà débuté, et le cas échéant, pour annuler ce verrouillage de la section réservée 46 effectué par l'application logicielle non-critique 14_{NC}, et mettre alors en attente la requête d'accès émise par l'application logicielle non-critique 14_{NC} pour ledit ensemble 30 de ressource(s) partagée(s). Autrement dit, la période temporelle tampon 44 précédant l'exécution de la prochaine application logicielle critique 14_{C} comportant une section réservée 46 pour ledit ensemble 30 de ressource(s) partagée(s) définit une zone interdite 50 durant laquelle l'application logicielle non-critique 14_{NC} ne peut pas conserver le verrouillage (de l'anglais *lock*) pour ledit ensemble 30 de ressource(s) partagée(s), et ne peut alors pas accéder audit ensemble 30 de ressource(s) partagée(s). L'accès exclusif par l'application logicielle non-critique 14_{NC} audit ensemble 30 de ressource(s) partagée(s) est alors reporté à la fin de cette zone interdite 50.

Le module de mise en attente 42 est de préférence configuré en outre pour calculer la durée de la période temporelle tampon 44 pour chaque ensemble 30 de ressource(s) partagée(s) préalablement déterminé et surveillé par le dispositif de surveillance 24 selon l'invention.

Pour chaque ensemble 30 de ressource(s) partagée(s), la durée de la période temporelle tampon 44 dépend par exemple d'un temps d'exécution de pire cas, également noté WCET (de l'anglais *Worst Case Execution Time*), de chaque section réservée 46 pour ledit ensemble 30 de ressource(s) partagée(s).

Pour chaque ensemble 30 de ressource(s) partagée(s), la durée de la période temporelle tampon 44 est de préférence égale au temps d'exécution de pire cas de durée maximale parmi le ou les temps d'exécution de pire cas de la ou des sections réservées 46 pour ledit ensemble 30 de ressource(s) partagée(s).

Chaque temps d'exécution de pire cas WCET est de préférence calculé lors d'une analyse statique préalable.

En variante, la durée de la période temporelle tampon 44 pour chaque ensemble 30 de ressource(s) partagée(s) est calculée lors d'une analyse statique préalable, et n'est pas calculée par le module de mise en attente 42.

**[Table 1]**

| | **Section critique** | **WCET** | **Durée période tampon** |
|---|---|---|---|
| Ressource 1 | Section critique 1.1 | 150ns | 400ns |
| | Section critique 1.2 | **400ns** | |
| | Section critique 1.3 | 10ns | |
| | Section critique 1.4 | 60ns | |
| Ressource 2 | Section critique 2.1 | 20ns | 80ns |
| | Section critique 2.2 | **80ns** | |

La table 1 ci-avant illustre le calcul de la durée de la période temporelle tampon 44 selon cette préférence, avec deux ensembles 30 de ressource(s) partagée(s), chacun comportant une unique ressource partagée 18s. Pour le premier ensemble 30 avec la ressource partagée 18s appelée « Ressource 1 », le temps d'exécution de pire cas WCET de durée maximale est de 400 ns et correspond à la section réservée, ou critique, 1.2, de sorte que la durée de la période temporelle tampon 44 pour le premier ensemble 30 est de 400 ns. De manière analogue, pour le deuxième ensemble 30 avec la ressource partagée 18s appelée « Ressource 2 », le temps d'exécution de pire cas WCET de durée maximale est celui de la section critique 2.2 et est égal à 80 ns, et la durée de la période temporelle tampon 44 pour ce deuxième ensemble 30 est alors égal à 80 ns.

En complément, au moins un ensemble 30 de ressource(s) partagée(s) comporte une pluralité de ressources partagées 18s et la durée de la période temporelle tampon 44 pour l'ensemble 30 correspondant est alors déterminée pour ladite pluralité de ressources partagées 18s.

Selon ce complément, dans le cas préférentiel où la durée de la période temporelle tampon 44 est égale au temps d'exécution de pire cas WCET de durée maximale parmi le ou les temps d'exécution de pire cas WCET de la ou des sections réservées 46 pour ledit ensemble 30 de ressource(s) partagée(s), la durée maximale prise en compte est alors celle pour l'ensemble des sections réservées 46 pour la pluralité de ressources partagées 18s.

Ainsi, dans l'exemple de la table 1 ci-avant, en supposant conformément à ce complément que la table 1 correspond à un unique ensemble 30 de plusieurs ressources partagées, formé des ressources appelées « Ressource 1 » et « Ressource 2 », et le temps d'exécution de pire cas WCET de durée maximale parmi les six temps d'exécution de pire cas WCET des six sections réservées 46 pour les deux ressources partagées 18s est celui correspondant à la section critique 1.2 et est égal à 400 ns, de sorte que la durée de la période temporelle tampon 44 pour cet ensemble 30 de deux ressources partagées est alors, par exemple selon le calcul préférentiel précité, égale à 400 ns.

En complément facultatif, le module de mise en attente 42 est configuré en outre pour mettre en attente la requête d'accès émise par l'application logicielle non-critique 14_{NC} si cette requête est émise pendant l'exécution de la prochaine application logicielle critique 14_{C} comportant la section réservée 46 pour ledit ensemble 30 de ressource(s) partagée(s).

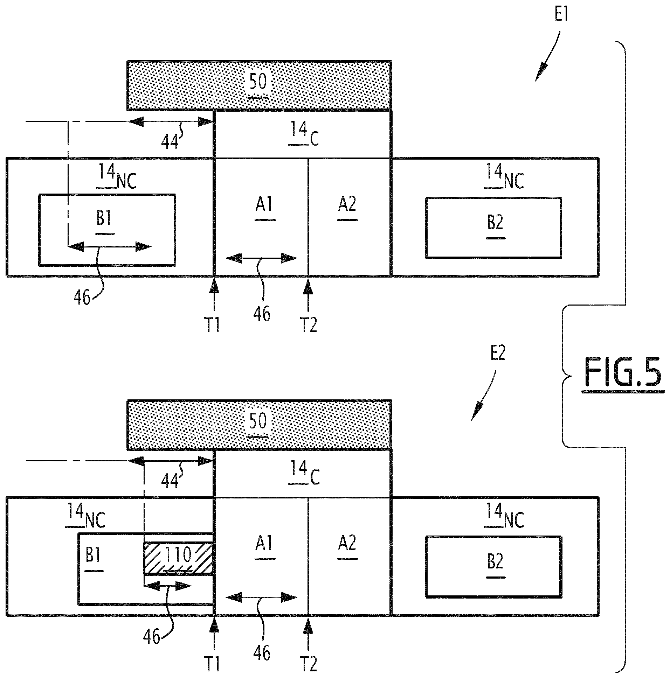

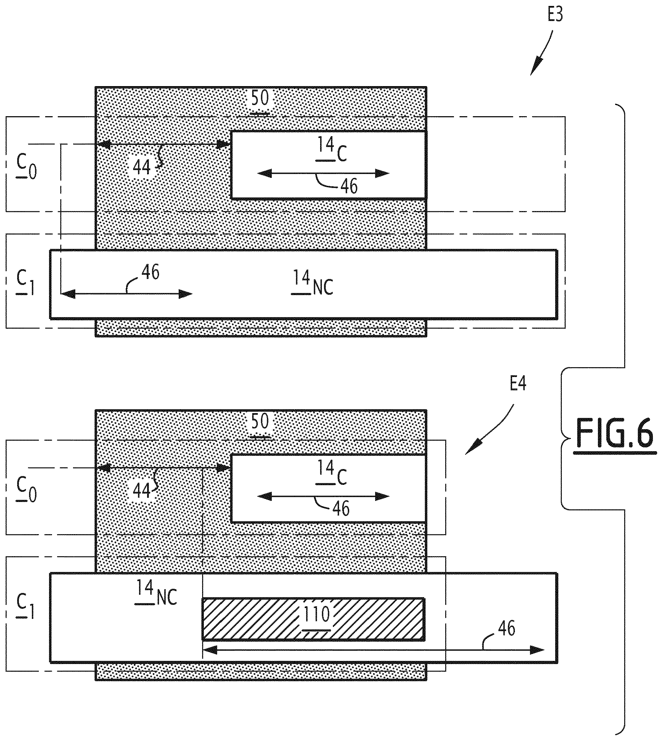

Selon ce complément facultatif, la zone interdite 50 résultant de cette mise en attente correspond alors à la période temporelle comportant la période temporelle tampon 44 précédant l'exécution de la prochaine application logicielle critique 14_{C} ainsi que l'exécution elle-même de cette prochaine application logicielle critique 14_{C}, comme représenté sur les exemples des figures 5 et 6.

Autrement dit, la durée de la zone interdite 50 est égale soit à la seule durée de la période temporelle tampon 44, soit à la somme des durées de la période temporelle tampon 44 et de l'exécution de la prochaine application logicielle critique 14_{C}.

L'homme du métier comprendra qu'outre cette durée, la zone interdite 50 est définie par un début et une portée, le début correspondant au commencement de la période temporelle tampon 44, c'est-à-dire correspondant à l'instant temporel de début d'exécution de la prochaine application logicielle critique 14_{C} auquel est retranchée la durée de la période tampon 44, et la portée correspondant à l'ensemble 30 de ressource(s) partagée(s) associé à cette période temporelle tampon 44 et à cette zone interdite 50.

Le module d'envoi 48 est configuré pour envoyer à l'application logicielle non-critique 14_{NC} un signal l'informant que sa requête d'accès a été mise en attente par le module de mise en attente 42. La réception de ce signal permet alors à l'application logicielle non-critique 14_{NC} concernée d'évaluer l'impact sur son fonctionnement de cette mise en attente, et notamment de voir si cette mise en attente est prévue dans ces marges de fonctionnement, de sorte que le signal de mise en attente peut être enregistré puis ignoré ; ou encore si cette mise en attente va entraîner un comportement anormal de l'application logicielle non-critique 14_{NC}, auquel cas ladite application logicielle non-critique 14_{NC} générera par exemple un message d'erreur associé.

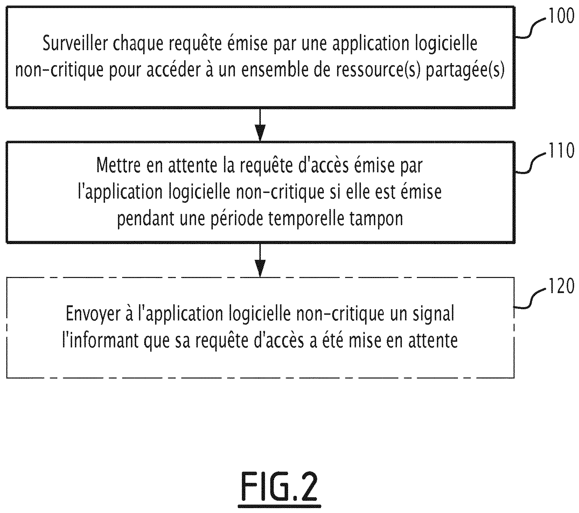

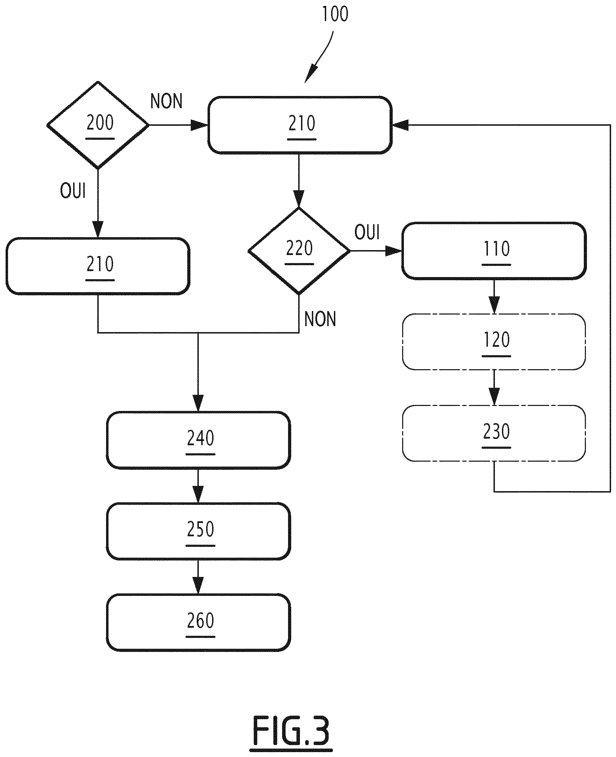

Le fonctionnement du dispositif de surveillance 24 selon l'invention va désormais être expliqué à l'aide de la figure 2 représentant un organigramme schématique du procédé, selon l'invention, de surveillance d'au moins une application logicielle 14, le procédé étant mis en œuvre par le dispositif électronique de surveillance 24, ainsi qu'à l'aide de la figure 3 représentant un logigramme d'un exemple de mise en œuvre de procédé de surveillance, avec utilisation d'un mécanisme de verrouillage.

Lors d'une étape 100, le dispositif de surveillance 24 surveille, via son module de surveillance 40, chaque requête d'accès émise par une application logicielle non-critique 14_{NC} respective pour accéder à un ensemble 30 respectif de ressource(s) partagée(s) entre ladite application logicielle non-critique 14_{NC} et au moins une application logicielle critique 14c.

Le dispositif de surveillance 24 vérifie ensuite, lors de l'étape 110, si la requête émise l'a été pendant une période temporelle tampon 44 respective précédant l'exécution de la prochaine application logicielle critique 14_{C} comportant une section réservée 46 respective pour ledit ensemble 30 de ressource(s) partagée(s), et met alors en attente ladite requête d'accès émise le cas échéant. Par contre, si la requête d'accès a été émise par l'application logicielle non-critique 14_{NC} en dehors de ladite période temporelle tampon 44, notamment avant ladite période temporelle tampon 44, alors le module de mise en attente 42 ne met pas en attente ladite requête d'accès et l'application logicielle non-critique 14_{NC} accède alors sans mise en attente à l'ensemble 30 de ressource(s) partagée(s).

En complément facultatif et si la requête émise par l'application logicielle non-critique 14_{NC} a été précédemment mise en attente lors de l'étape 110, alors le dispositif de surveillance 24 envoie, via son module d'envoi 48, un signal correspondant à l'application logicielle non-critique 14_{NC} pour l'informer que sa requête d'accès a été mise en attente lors de la précédente étape 110.

Le dispositif de surveillance 24 retourne ensuite à l'étape 100 afin de surveiller la prochaine requête émise par une application logicielle non-critique 14_{NC}.

La figure 3 illustre une mise en œuvre du procédé de surveillance selon l'invention dans le cas où un mécanisme de verrouillage est utilisé, via le système d'exploitation 20, pour pouvoir réserver une section critique 46 pour un ensemble 30 respectif de ressource(s) partagée(s).

Sur la figure 3, lors d'une étape initiale 200, le dispositif de surveillance 24 détermine, via son module de surveillance 40, si l'application logicielle 14 souhaitant réserver une section critique 46 pour ledit ensemble 30 de ressource(s) partagée(s) est une application logicielle critique 14_{C} ou bien une application logicielle non-critique 14_{NC}.

Si l'application logicielle 14 souhaitant réserver la section critique 46 est une application logicielle non-critique 14_{NC}, alors le dispositif de surveillance 24 effectue ensuite - via le système d'exploitation 20 - un verrouillage de la ou des ressources dudit ensemble 30 de ressource(s) partagée(s) correspondant à ladite section critique 46 pour l'accès exclusif par ladite application logicielle 14, puis passe directement à une étape suivante 220 au cours de laquelle le dispositif de surveillance 24 détermine via son module de mise en attente 42 si une zone interdite 50 est en cours pour ladite section critique 46, c'est-à-dire détermine si la requête émise par l'application logicielle non-critique 14_{NC} l'a été ou non pendant une période temporelle tampon 44 précédant l'exécution de la prochaine application logicielle critique 14_{C} comportant ladite section réservée 46 pour ledit ensemble 30 de ressource(s) partagée(s) ou en complément facultatif pendant l'exécution de ladite prochaine application logicielle critique 14_{C}.

A l'issue de cette étape de test 220, si le module de mise en attente 42 détermine que la requête d'accès a été émise par l'application logicielle non-critique 14_{NC} pendant une zone interdite 50, c'est-à-dire pendant ladite période temporelle tampon 44 ou en complément facultatif pendant l'exécution de la prochaine application logicielle critique 14_{C} comportant ladite sélection critique 46, alors le dispositif de surveillance 24 effectue ensuite l'étape de mise en attente 110 décrite précédemment, puis optionnellement l'étape 120 d'envoi du signal d'informations à l'application logicielle non-critique 14_{NC}, avant d'observer une période d'attente lors de l'étape 230, par exemple via le déclenchement d'une temporisation, avant de retourner à l'étape 210, puis ensuite l'étape 220 afin de voir si la zone interdite 50 est toujours en cours suite à cette attente.

Dans cet exemple, l'étape de mise en attente 110 correspond alors à une annulation du verrouillage de la section critique 46 précédemment effectuée lors de l'étape 210, c'est-à-dire à une libération du verrou via le système d'exploitation 20 (de l'anglais *lock release*).

A l'issue de l'étape de test 220, si au contraire le module de mise en attente 42 a déterminé que la requête a été émise en dehors d'une zone interdite 50, c'est-à-dire qu'elle n'a pas été émise pendant une période temporelle tampon 44 respective, et en complément facultatif pas pendant l'exécution de ladite prochaine application logicielle critique 14_{C}, alors le dispositif de surveillance 24 passe à l'étape suivante 240 afin d'enregistrer cette section réservée 46, notamment un identifiant de l'application logicielle 14 ayant obtenu un accès exclusif à cette section réservée 46.

Suite à l'étape 240, l'étape 250 est ensuite effectuée et correspond à l'exécution en tant que telle de la section réservée 46, c'est-à-dire à l'accès exclusif par ladite application logicielle 14 à la ou aux ressources 18 concernées dudit ensemble 30 de ressource(s) partagée(s).

Enfin, lors de l'étape 260, à la fin de l'exécution de la section réservée 46, la section réservée 46 est libérée par l'application logicielle 14 correspondante, en libérant - via le système d'exploitation 20 - le verrou pour la ou les ressources concernées, et ladite application logicielle 14 n'a alors plus accès à cette ou ces ressources 18_{S}.

A l'issue de l'étape initiale 200, si le dispositif de surveillance 24 détermine au contraire que l'application logicielle 14 requérant l'accès est une application logicielle critique 14_{C}, alors le dispositif de surveillance 24 verrouille également la section réservée 46 lors de l'étape 210 via le système d'exploitation 20, puis passe directement à l'étape 240, et ensuite aux étapes 250 et 260, décrites précédemment, sans effectuer l'étape de test 220.

Autrement dit, si le dispositif de surveillance 24 détermine que la requête d'accès pour la ou les ressources correspondant à la section critique 46 a été émise par une application logicielle critique 14_{C}, alors le dispositif de surveillance 24 ne mettra pas en attente cette requête d'accès.

Autrement dit, la mise en attente effectuée par le module de mise en attente 42 si la requête est émise pendant une période temporelle tampon 44 respective concerne uniquement une application logicielle non-critique 14_{NC} correspondante, et ne concerne pas une application logicielle critique 14_{C}.

La figure 5 illustre une première mise en œuvre de la surveillance selon l'invention lorsque la ou les applications logicielles non-critiques 14_{NC} et la ou les applications logicielles critiques 14_{C} sont aptes à être exécutées sur un même cœur de processeur, par exemple lorsque l'application logicielle critique 14_{C} est une fonction de commutation entre deux applications logicielles non-critiques 14_{NC} successives.

Sur la figure 5, un premier exemple E1 est alors un exemple où une première application logicielle non-critique 14_{NC} comportant un traitement B1 requiert un accès exclusif à au moins l'une des ressources 18 d'un ensemble 30 respectif de ressource(s) partagée(s) avec l'application logicielle critique 14_{C}, ceci avant le début de la période temporelle tampon 44 précédant l'exécution de l'application logicielle critique 14_{C} comportant la section réservée 46 au cours d'un premier A1 de ses deux traitements A1, A2.

Dans ce premier exemple E1, comme la requête d'accès émise par l'application logicielle non-critique 14_{NC} l'a été précédemment à la période temporelle tampon 44, ou encore en dehors de la zone interdite 50, alors elle n'est pas mise en attente, et le traitement B1 de cette application logicielle non-critique 14_{NC} peut alors accéder de manière exclusive à la ou aux ressources associées à ladite section réservée 46, et cette section réservée 46 est alors ensuite libérée, du fait de la prise en compte de la période temporelle tampon 44, avant que la prochaine application logicielle critique 14_{C} ait à son tour besoin de ladite section réservée 46 au cours de l'exécution de son premier traitement A1.

Dans cette première mise en œuvre, le premier traitement A1 de la fonction de commutation correspond à une pause de toutes les activités en cours, puis à une sauvegarde du contexte, puis un deuxième traitement A2 de la fonction de commutation correspond à une restauration d'un contexte précédemment sauvegardé, afin que la prochaine application logicielle non-critique 14_{NC} puisse s'exécuter avec le contexte qui lui correspond.

Selon ce premier exemple E1, la prochaine application logicielle critique 14_{C} exécute alors sans décalage temporel, à un premier instant temporel T1 son premier traitement A1 comportant la section critique 46, puis son deuxième traitement A2 à un deuxième instant temporel T2, avant que le cœur commute vers l'exécution de l'application logicielle non-critique 14_{NC} suivante pour qu'elle effectue normalement son traitement B2.

Sur la figure 5, un deuxième exemple E2 représente ensuite un autre exemple où cette fois-ci la requête émise par le traitement B1 de l'application logicielle non-critique 14_{NC} pour la section réservée 46 l'est pendant la période temporelle tampon 44 précédant l'exécution de la prochaine application logicielle critique 14_{C} comportant la section réservée 46 (lors de son traitement A1) pour ledit ensemble 30 de ressource(s) partagée(s). La requête d'accès émise par le traitement B1 de l'application logicielle non-critique 14_{NC} est alors mise en attente, comme représenté par la boîte 110 schématisant l'étape de mise en attente décrite précédemment, et le traitement B1 de l'application logicielle non-critique 14_{NC} ne peut alors accéder à ce moment-là à la ou aux ressources dudit ensemble 30 de ressource(s) partagée(s) associé à ladite section critique 46.

Selon ce deuxième exemple E2, la prochaine application logicielle critique 14_{C} exécute alors normalement, c'est-à-dire sans retard, ou encore sans décalage temporel, au même premier instant temporel T1 son traitement A1 comportant la section critique 46, puis son deuxième traitement A2 au même deuxième instant temporel T2, avant que le cœur commute vers l'exécution de l'application logicielle non-critique 14_{NC} suivante pour qu'elle effectue son traitement B2.

L'homme du métier comprendra alors que, dans ce deuxième exemple E2, le traitement B1 de l'application logicielle non-critique NC n'aura pas pu avoir accès à la section critique 46 lors de cette itération, car cet accès a été mis en attente. En effet, si l'application logicielle non-critique 14_{NC} avait pu avoir accès à cette section critique 46 à cet instant pour son traitement B1, alors cet accès exclusif à la ou aux ressources associées à cette section critique 46 aurait ensuite potentiellement entraîné un retard dans l'exécution de la prochaine application logicielle critique 14_{C}, c'est-à-dire un décalage temporel des premier et deuxième instants temporels T1, T2, ce qui est à proscrire.

La figure 6 illustre une deuxième mise en œuvre de la surveillance selon l'invention selon laquelle l'application logicielle critique 14_{C} est apte à être exécutée sur un premier cœur C0 d'un processeur multicœur de la plateforme 16, pendant que l'application logicielle non-critique 14_{NC} est apte à être exécutée sur un deuxième cœur C1 dudit processeur, l'application logicielle critique 14_{C} et l'application logicielle non-critique 14_{NC} ayant néanmoins au moins une ressource partagée 18s en commun, telle qu'une zone mémoire de la mémoire 27 ou une partie du périphérique 28 de la plateforme 16, correspondant à la section critique 46 représentée sur la figure 6.

Dans cette deuxième mise en œuvre, le troisième exemple E3 est alors un exemple où la section critique 46 de l'application logicielle non-critique 14_{NC} débute avant la période temporelle tampon 44 précédant l'exécution de l'application logicielle critique 14_{C}, et la requête d'accès émise par l'application logicielle non-critique 14_{NC} au début de la section critique 46 pour avoir un accès exclusif à la ou aux ressources18s associées à cette section critique 46 n'est alors pas mise en attente par le module de mise en attente 42. L'application logicielle non-critique 14_{NC} a alors un accès exclusif à la ou aux ressources associées à ladite section critique 46. L'application logicielle non-critique 14_{NC} libère ensuite la section critique 46 avant la prochaine application logicielle critique 14_{C} comportant ladite section réservée 46, le fait que cette section critique 46 puisse être libérée avant cette prochaine exécution résultant de la prise en compte de la période temporelle tampon 44.

Dans cette deuxième mise en œuvre, le quatrième exemple E4 illustre un autre exemple où la section critique 46 de l'application logicielle non-critique 14_{NC} débute cette fois-ci pendant la période temporelle tampon 44 précédant l'exécution de la prochaine application logicielle critique 14_{C} comportant ladite section critique 46. La requête émise au début de sa section critique 46 par l'application logicielle non-critique 14_{NC} est alors mise en attente par le module de mise en attente 42, comme schématisé par la boîte 110 dans ce quatrième exemple E4, de sorte que l'application logicielle non-critique 14_{NC} n'a pas accès à la ou aux ressources 18s associées à cette section critique 46 à ce moment-là. Ceci permet alors de réduire le risque que lors de l'exécution de la prochaine application logicielle critique 14_{C} comportant la section critique 46 pour le même ensemble 30 de ressource(s) partagée(s), l'accès exclusif par ladite application logicielle critique 14_{C} à la ou aux ressources 18s associées à cette section critique 46 ne soit retardé du fait de l'application logicielle non-critique 14_{NC}.

L'homme du métier observera en outre que, dans ce quatrième exemple E4, la requête d'accès initialement émise par l'application logicielle non-critique 14_{NC} au début de sa section critique 46 est mise en attente jusqu'à la fin de l'exécution de l'application logicielle critique 14_{C} comportant ladite section critique 46, comme schématisé par la boîte 110 se terminant en même temps que la fin de l'exécution de l'application logicielle critique 14_{C}. A la fin de cette zone interdite 50, l'application logicielle non-critique 14_{NC} obtient alors l'accès exclusif à la ou aux ressources 18s associées à ladite section 46, comme schématisé par la flèche représentant la section 46 pour l'application logicielle non-critique 14_{NC} qui se poursuit après la fin de l'exécution de l'application logicielle critique 14_{C} et la fin de la zone interdite 50.

L'homme du métier comprendra alors que si la requête d'accès émise par l'application logicielle non-critique 14_{NC} l'est pendant une période temporelle tampon 44 correspondante, alors cette requête d'accès n'est pas pour autant rejetée, mais est simplement mise en attente par le module de mise en attente 42, et ce de préférence jusqu'à la fin de l'exécution de l'application logicielle critique 14_{C} comportant la section critique 46 pour le même ensemble 30 de ressource(s) partagée(s).

Ainsi, le dispositif de surveillance 24 et le procédé de surveillance selon l'invention permettent, de par la période temporelle tampon 44, d'éviter qu'une requête d'accès qui serait émise par une application logicielle non-critique 14_{NC} à un mauvais moment, c'est-à-dire à un instant temporel trop proche de la prochaine application logicielle critique 14_{C} comportant une section réservée 46 respective pour le même ensemble 30 de ressource(s) partagée(s) que celui pour lequel la requête d'accès a été émise par l'application logicielle non-critique 14_{NC}, vienne ensuite retarder l'exécution de ladite prochaine application logicielle critique 14_{C}. Le cas échéant, le dispositif de surveillance 24 selon l'invention met alors en attente ladite requête d'accès émise par l'application logicielle non-critique 14_{NC} pour donner la priorité à l'exécution de la prochaine application logicielle critique 14_{C} et éviter un retard dans l'exécution de celle-ci. L'application logicielle non-critique 14_{NC} pourra alors avoir accès exclusivement à la ou aux ressources partagées 18s dudit ensemble 30 à l'issue de l'exécution de cette application logicielle critique 14c.

Ceci permet alors d'offrir un meilleur fonctionnement de la plateforme 16, notamment des applications logicielles critiques 14_{C} devant être exécutées dans un temps donné avec une tolérance temporelle définie, tout en offrant une bonne exécution de toutes les applications logicielles, y compris des applications logicielles non-critiques, puisque les requêtes d'accès émises par les applications logicielles non-critiques 14_{NC} ne sont le cas échéant pas rejetées, mais simplement mises en attente.

En complément facultatif, l'envoi à l'application logicielle non-critique 14_{NC} d'un signal l'informant que sa requête d'accès a été le cas échéant mise en attente, permet à l'application logicielle non-critique 14_{NC} d'être, d'une part, au courant de cette mise en attente, et d'autre part, de pouvoir évaluer l'impact sur son fonctionnement de cette mise en attente.

En complément facultatif encore, la mise en attente de la requête d'accès émise par l'application logicielle non-critique 14_{NC} également si elle est émise pendant l'exécution de la prochaine application logicielle critique 14_{C} comportant ladite section réservée 46 pour ledit ensemble 30 de ressource(s) partagée(s) permet d'améliorer encore le fonctionnement de la plateforme 16, en incluant - dans la zone interdite 50 résultant de la période temporelle tampon 44 - également la période temporelle correspondant à l'exécution en tant que telle de l'application logicielle critique 14_{C}.

En complément facultatif encore, le calcul de la durée de la période temporelle tampon 44 en fonction du temps d'exécution de pire cas WCET de chaque section réservée 46 pour ledit ensemble 30 de ressource(s) partagée(s) permet aussi d'améliorer davantage le fonctionnement de la plateforme 16, en cherchant à garantir que quel que soit le temps d'exécution de chaque section réservée 46 prise en compte, la durée de la période temporelle tampon 44 sera suffisante pour éviter que l'exécution d'une section réservée 46 pour un ensemble 30 de ressource(s) partagée(s) par une application logicielle non-critique 14_{NC} vienne ensuite retarder l'exécution de la prochaine application logicielle critique 14_{C} comportant la section réservée 46 pour ledit ensemble 30 de ressource(s) partagée(s).

On conçoit ainsi que le procédé de surveillance et le dispositif de surveillance 24 selon l'invention permettent d'offrir un meilleur fonctionnement de la plateforme 16, en améliorant l'exécution des applications logicielles 14, notamment des applications logicielles critiques 14_{C} devant généralement être exécutées dans un temps donné avec une tolérance temporelle définie.

## Revendications

1. Procédé de surveillance d'au moins une application logicielle (14) apte à être exécutée sur une plateforme (16), la plateforme (16) comportant des ressources (18) auxquelles chaque application logicielle est susceptible d'accéder lors de son exécution, le procédé étant mis en œuvre par un dispositif électronique de surveillance (24) et comprenant l'étape suivante :
- surveiller (100) chaque requête d'accès émise par une application logicielle non-critique (14_{NC}) pour accéder à un ensemble (30) de ressource(s) (18_{S}) partagée(s) entre ladite application logicielle non-critique (14_{NC}) et au moins une application logicielle critique (14_{C}) ; et **caractérisé en ce qu'**il comprend l'étape suivante qui consiste à
- mettre en attente (110) la requête d'accès émise par l'application logicielle non-critique (14_{NC}) si ladite requête est émise pendant une période temporelle tampon (44) précédant l'exécution de la prochaine application logicielle critique (14_{C}) comportant une section réservée (46) pour ledit ensemble (30) de ressource(s) partagée(s) (18_{S}), la section réservée (46) étant une période temporelle au cours de laquelle l'une de l'au moins une application logicielle critique (14_{C}) requiert un accès exclusif à au moins l'une des ressources dudit ensemble (30) de ressource(s) partagée(s) (18_{S}).

2. Procédé selon la revendication 1, dans lequel ladite requête d'accès émise par l'application logicielle non-critique (14_{NC}) est en outre mise en attente si elle est émise pendant l'exécution de la prochaine application logicielle critique (14_{C}) comportant la section réservée (46) pour ledit ensemble (30) de ressource(s) partagée(s) (18_{S}).

3. Procédé selon la revendication 1 ou 2, dans lequel la durée de la période temporelle tampon (44) dépend d'un temps d'exécution de pire cas de chaque section réservée (46) pour ledit ensemble (30) de ressource(s) partagée(s) (18_{S}),
la durée de la période temporelle tampon (44) étant de préférence égale au temps d'exécution de pire cas de durée maximale parmi le ou les temps d'exécution de pire cas de la ou des sections réservées (46) pour ledit ensemble (30) de ressource(s) partagée(s) (18_{S}),
chaque temps d'exécution de pire cas étant de préférence calculé lors d'une analyse statique préalable.

4. Procédé selon l'une quelconque des revendications précédentes, dans lequel l'ensemble (30) de ressource(s) partagée(s) (18_{S}) comporte une pluralité de ressources partagées (18s), et la durée de la période temporelle tampon (44) est déterminée pour ladite pluralité de ressources partagées (18s).

5. Procédé selon l'une quelconque des revendications précédentes, dans lequel chaque ressource partagée (18s) est choisie parmi le groupe consistant en : un cœur d'un processeur de la plateforme (16), une zone mémoire de la plateforme (16) hébergeant un objet logiciel partagé par plusieurs fils d'exécution, une partie d'un périphérique de la plateforme (16).

6. Procédé selon l'une quelconque des revendications précédentes, dans lequel le procédé comprend en outre l'étape suivante :
- envoyer (120) à l'application logicielle non-critique (14_{NC}) un signal l'informant que sa requête d'accès a été mise en attente.

7. Procédé selon l'une quelconque des revendications précédentes, dans lequel chaque application logicielle critique (14c) a un niveau de criticité correspondant à un niveau DAL défini selon la norme DO-178 révision B et suivante(s), ou selon la norme ARP4754,
le niveau de criticité étant de préférence égal au niveau DAL A ou au niveau DAL B,
les niveaux DAL A et DAL B étant de préférence encore considérés comme les plus critiques.

8. Procédé selon l'une quelconque des revendications précédentes, dans lequel chaque application logicielle (14) est une application logicielle avionique, la plateforme (16) étant destinée à être embarquée à bord d'un aéronef.

9. Programme d'ordinateur comportant des instructions logicielles qui, lorsqu'elles sont exécutées par un ordinateur, mettent en œuvre un procédé selon l'une quelconque des revendications précédentes.

10. Dispositif électronique (24) de surveillance d'au moins une application logicielle (14) apte à être exécutée sur une plateforme (16), la plateforme (16) comportant des ressources (18) auxquelles chaque application logicielle (14) est susceptible d'accéder lors de son exécution, le dispositif électronique de surveillance (24) comprenant :
- un module de surveillance (40) configuré pour surveiller chaque requête d'accès émise par une application logicielle non-critique (14_{NC}) afin d'accéder à un ensemble (30) de ressource(s) (18s) partagée(s) entre ladite application logicielle non-critique (14_{NC}) et au moins une application logicielle critique (14_{C}) ; et **caractérisé en ce qu'**il comprend
- un module de mise en attente (42) configuré pour mettre en attente la requête d'accès émise par l'application logicielle non-critique (14_{NC}) si ladite requête est émise pendant une période temporelle tampon (44) précédant l'exécution de la prochaine application logicielle critique (14c) comportant une section réservée (46) pour ledit ensemble (30) de ressource(s) partagée(s) (18s), la section réservée (46) étant une période temporelle au cours de laquelle l'une de l'au moins une application logicielle critique (14c) requiert un accès exclusif à au moins l'une des ressources dudit ensemble (30) de ressource(s) partagée(s) (18s).

11. Système électronique avionique (10) comprenant :
- une mémoire (12) apte à stocker au moins une application logicielle avionique (14) ;
- une plateforme (16) apte à exécuter chaque application logicielle avionique (14), la plateforme (16) comportant des ressources (18) auxquelles chaque application logicielle (14) est susceptible d'accéder lors de son exécution ; et
- un dispositif électronique (24) de surveillance de chaque application logicielle avionique (14), le dispositif électronique de surveillance (24) étant selon la revendication précédente.

## Patentansprüche

1. Verfahren zur Überwachung mindestens einer Softwareanwendung (14), die geeignet ist, auf einer Plattform (16) ausgeführt zu werden, wobei die Plattform (16) Ressourcen (18) umfasst, auf die jede Softwareanwendung während ihrer Ausführung zugreifen kann, wobei das Verfahren durch eine elektronische Überwachungsvorrichtung (24) implementiert wird und die folgenden Schritte umfasst:
- Überwachen (100) jeder Zugriffsanforderung, die von einer nicht-kritischen Softwareanwendung (14_{NC}) ausgegeben wird, um auf einen Satz (30) von Ressourcen (18_{S}) zuzugreifen, die von der nicht-kritischen Softwareanwendung (14_{NC}) und mindestens einer kritischen Softwareanwendung (14_{C}) gemeinsam genutzt werden; und charakterisiert dadurch, dass es den folgenden Schritt aufweist, der besteht aus
- Zurückstellen (110) der Zugriffsanforderung, die von der nicht-kritischen Softwareanwendung (14_{NC}) ausgegeben wird, wenn die Anforderung während eines Pufferzeitraums (44) vor der Ausführung der nächsten kritischen Softwareanwendung (14_{C}) ausgegeben wird, die einen reservierten Abschnitt (46) für den Satz (30) von gemeinsam genutzten Ressourcen (18_{S}) hat, wobei der reservierte Abschnitt (46) ein Zeitraum ist, während der eine der mindestens einen kritischen Softwareanwendung (14_{C}) exklusiven Zugriff auf mindestens eine der Ressourcen des Satzes (30) von gemeinsam genutzten Ressourcen (18_{S}) erfordert.

2. Verfahren nach Anspruch 1, wobei die von der nicht-kritischen Softwareanwendung (14_{NC}) ausgegebene Zugriffsanforderung ferner zurückgestellt wird, wenn sie während der Ausführung der nächsten kritischen Softwareanwendung (14_{C}) ausgegeben wird, die den reservierten Abschnitt (46) für den Satz (30) der gemeinsam genutzten Ressource(n) (18_{S}) hat.

3. Verfahren nach Anspruch 1 oder 2, wobei die Dauer des Pufferzeitraums (44) von einer Worst-Case-Ausführungszeit jedes reservierten Abschnitts (46) für den Satz (30) von gemeinsam genutzten Ressourcen (18_{S}) abhängt,
wobei die Dauer des Pufferzeitraums (44) vorzugsweise gleich der maximalen Dauer der Worst-Case-Ausführungszeit von den einen oder mehreren Worst-Case-Ausführungszeiten des einen reservierten Abschnitts oder der reservierten Abschnitte (46) für den Satz (30) gemeinsam genutzter Ressourcen (18_{S}) ist,
wobei jede Worst-Case-Ausführungszeit vorzugsweise in einer vorherigen statischen Analyse berechnet wird.

4. Verfahren nach einem der vorhergehenden Ansprüche, wobei der Satz (30) der gemeinsam genutzten Ressource(n) (18_{S}) eine Mehrzahl von gemeinsam genutzten Ressourcen (18_{S}) umfasst und die Dauer des Pufferzeitraums (44) für die Mehrzahl von gemeinsam genutzten Ressourcen (18_{S}) bestimmt wird.

5. Verfahren nach einem der vorhergehenden Ansprüche, wobei jede gemeinsam genutzte Ressource (18_{S}) aus der Gruppe ausgewählt ist, die besteht aus: einem Kern eines Prozessors der Plattform (16), einem Speicherbereich der Plattform (16), der ein Softwareobjekt beherbergt, das von einer Mehrzahl von Threads gemeinsam genutzt wird, einem Teil einer Peripherie der Plattform (16).

6. Verfahren nach einem der vorhergehenden Ansprüche, wobei das Verfahren ferner den folgenden Schritt umfasst:
- Senden (120) eines Signals an die unkritische Softwareanwendung (14_{NC}), das diese darüber informiert, dass ihre Zugriffsanforderung zurückgestellt wurde.

7. Verfahren nach einem der vorhergehenden Ansprüche, wobei jede kritische Softwareanwendung (14_{C}) eine Kritikalitätsstufe hat, die einer DAL-Stufe entspricht, die gemäß der Norm DO-178 Revision B und Folgende oder gemäß der Norm ARP4754 definiert ist,
wobei die Kritikalitätsstufe vorzugsweise gleich der Stufe DAL A oder der Stufe DAL B ist,
wobei die Stufen DAL A und DAL B vorzugsweise noch als die kritischsten angesehen werden.

8. Verfahren nach einem der vorhergehenden Ansprüche, wobei jede Software-Anwendung (14) eine Avionik-Software-Anwendung ist und die Plattform (16) dazu bestimmt ist, an Bord eines Flugzeugs mitgeführt zu werden.

9. Computerprogramm, das Softwarebefehle aufweist, die bei Ausführung durch einen Computer ein Verfahren nach einem der vorangehenden Ansprüche implementieren.

10. Elektronische Vorrichtung (24) zur Überwachung mindestens einer Softwareanwendung (14), die auf einer Plattform (16) ausgeführt werden kann, wobei die Plattform (16) Ressourcen (18) umfasst, auf die jede Softwareanwendung (14) während ihrer Ausführung zugreifen kann, wobei die elektronische Überwachungsvorrichtung (24) umfasst:
- ein Überwachungsmodul (40), das so eingerichtet ist, dass es jede von einer nicht-kritischen Softwareanwendung (14_{NC}) ausgegebene Zugriffsanforderung überwacht, um auf einen Satz (30) von Ressourcen (18_{S}) zuzugreifen, die von der nicht-kritischen Softwareanwendung (14_{NC}) und mindestens einer kritischen Softwareanwendung (14_{C}) gemeinsam genutzt werden; und dadurch charakterisiert, dass sie aufweist
- ein Zurückstellungsmodul (42), das so eingerichtet ist, dass es die von der nicht-kritischen Softwareanwendung (14_{NC}) ausgegebene Zugriffsanforderung zurückstellt, wenn die Anforderung während eines Pufferzeitraums (44) vor der Ausführung der nächsten kritischen Softwareanwendung (14_{C}) ausgegeben wird, der einen reservierten Abschnitt (46) für den Satz (30) gemeinsam genutzter Ressourcen (18_{S}) enthält, wobei der reservierte Abschnitt (46) ein Zeitraum ist, während der eine der mindestens einen kritischen Softwareanwendung (14_{C}) exklusiven Zugriff auf mindestens eine der Ressourcen des Satzes (30) von gemeinsam genutzten Ressourcen (18_{S}) erfordert.

11. Ein elektronisches Avioniksystem (10), umfassend:
- einem Speicher (12), der geeignet ist, mindestens eine Avionik-Softwareanwendung (14) zu speichern;
- eine Plattform (16), die geeignet ist, jede Avioniksoftware-Anwendung (14) auszuführen, wobei die Plattform (16) Ressourcen (18) enthält, auf die jede Software-Anwendung (14) während ihrer Ausführung zugreifen kann; und
- eine elektronische Vorrichtung (24) zur Überwachung jeder Avioniksoftware-Anwendung (14), wobei die elektronische Überwachungsvorrichtung (24) gemäß dem vorhergehenden Anspruch ist.

## Claims

1. A method for monitoring at least one software application (14) able to be executed on a platform (16), the platform (16) including resources (18) that each software application is able to access during its execution, the method being implemented by an electronic monitoring device (24) and comprising the following step:
- monitoring (100) each access request sent by a non-critical software application (14_{NC}) in order to access a set (30) of resource(s) (18_{S}) shared between said non-critical software application (14_{NC}) and at least one critical software application (14_{C}); and **characterized in that** it comprises the following step consisting in:
- putting the access request sent by the non-critical software application (14_{NC}) on hold (110) if said request is sent during a buffer time period (44) preceding the execution of the next critical software application (14_{C}) including a reserved section (46) for said set (30) of shared resource(s) (18s), the reserved section (46) being a time period during which one of the at least one critical software application (14_{C}) requests exclusive access to at least one of the resources of said set (30) of shared resource(s) (18_{S}).

2. The method according to claim 1, wherein said access request sent by the non-critical software application (14_{NC}) is further put on hold if it is sent during the execution of the next critical software application (14_{C}) including the reserved section (46) for said set (30) of shared resource(s) (18_{S}).

3. The method according to claim 1 or 2, wherein the duration of the buffer time period (44) depends on a worst-case execution time of each reserved section (46) for said set (30) of shared resource(s) (18_{S}),
the duration of the buffer time period (44) preferably being equal to the worst case execution time of maximum duration among the worst case execution time(s) of the reserved section(s) (46) for said set (30) of shared resource(s) (18_{S}),
each worst case execution time preferably being calculated during a prior static analysis.

4. The method according to any one of the preceding claims, wherein the set (30) of shared resource(s) (18_{S}) includes a plurality of shared resources (18_{S}), and the duration of the buffer time period (44) is determined for said plurality of shared resources (18_{S}).

5. The method according to any one of the preceding claims, wherein each shared resource (18_{S}) is chosen from among the group consisting of: a core of a processor of the platform (16), a memory zone of the platform (16) hosting a software object shared by several execution threads, a part of a peripheral of the platform (16).

6. The method according to any one of the preceding claims, wherein the method further comprises the following step:
- sending (120) the non-critical software application (14_{NC}) a signal informing it that its access request has been put on hold.

7. The method according to any one of the preceding claims, wherein each critical software application (14_{C}) has a criticality level corresponding to a DAL level defined according to standard DO-178 revision B and following revision(s), or according to standard ARP4754,
the criticality level preferably being equal to level DAL A or to level DAL B,
the levels DAL A and DAL B preferably still being considered the most critical.

8. The method according to any one of the preceding claims, wherein each software application (14) is an avionics software application, the platform (16) being intended to be embedded in an aircraft.

9. A computer program comprising software instructions which, when executed by a computer, carry out a method according to any one of the preceding claims.

10. An electronic device (24) for monitoring at least one software application (14) able to be executed on a platform (16), the platform (16) including resources (18) that each software application (14) is able to access during its execution, the electronic monitoring device (24) comprising:
- a monitoring module (40) configured to monitor each access request sent by a non-critical software application (14_{NC}) in order to access a set (30) of resource(s) (18_{S}) shared between said non-critical software application (14_{NC}) and at least one critical software application (14_{C}); and
**characterized in that** it comprises:
- a hold module (42) configured to put the access request sent by the non-critical software application (14_{NC}) on hold if said request is sent during a buffer time period (44) preceding the execution of the next critical software application (14_{C}) including a reserved section (46) for said set (30) of shared resource(s) (18_{S}), the reserved section (46) being a time period during which one of the at least one critical software application (14_{C}) requests exclusive access to at least one of the resources of said set (30) of shared resource(s) (18_{S}).

11. An electronic avionics system (10), comprising:
- a memory (12) able to store at least one avionics software application (14);
- a platform (16) able to execute each avionics software application (14), the platform (16) including resources (18) that each software application (14) is able to access during its execution; and
- an electronic monitoring device (24) for monitoring each avionics software application (14), the electronic monitoring device (24) being according to the preceding claim.
